# EUROPEAN PATENT APPLICATION

(11) **EP 4 733 559 A1**
(43) Date of publication of application: **29.04.2026**
(21) Application number: 25211191.9
(22) Date of filing: 24.10.2025
(51) Int. Cl.: F02C 3/22, F23R 3/28

(54) **BIMETALLIC HYDROGEN FUEL NOZZLE WITH MULTIPLE FLOW CIRCUITS**

(30) Priority: 28.10.2024 US 202463712950 P
(71) Applicant: PRATT & WHITNEY CANADA CORP., Longueuil, Québec J4G 1A1 (CA)
(72) Inventor: AGOPIAN, Luca, (01BE5) Longueuil, J4G 1A1 (CA); POULIN, Jean-Rene, (01BE5) Longueuil, J4G 1A1 (CA); FAGNAN, Mathieu, (01BE5) Longueuil, J4G 1A1 (CA)
(74) Representative: Dehns

(57) **Abstract**

A hydrogen fuel nozzle (100) for a gas turbine engine has a plurality of flow circuits (110, 120, 130), each of which is configured to flow one of a fuel or an oxidizer to a gas turbine engine combustor positioned downstream of the hydrogen fuel nozzle (100) when the gas turbine engine is assembled. At least one of the plurality of flow circuits (110, 120, 130) is a hydrogen flow circuit (110) configured to flow hydrogen to the gas turbine engine combustor. The hydrogen fuel nozzle (100) is formed using an additive manufacturing (AM) technique. A non-hydrogen-exposed zone of the hydrogen fuel nozzle (100) is made with a first material which is a conventional high temperature capable alloy. A hydrogen-exposed zone of the hydrogen fuel nozzle (100) is made with a second material, which is a hydrogen-compatible alloy.

## Description

### BACKGROUND

The present disclosure relates generally to a hydrogen fuel nozzle for a gas turbine engine and, more particularly, to a hydrogen fuel nozzle made for a gas turbine engine with additive manufacturing (AM) techniques.

The use of hydrogen as an alternative fuel for aircraft engines has gained attention in recent years due to an increased demand for sustainable fuels. Incorporating hydrogen as an aircraft engine fuel in a feasible manner brings certain challenges. One of these challenges is leakage that may occur in traditional jointed components due to the small size of hydrogen molecules. Hydrogen molecules that may leak into connected joints can cause hydrogen embrittlement and premature combustion. Further, hydrogen embrittlement can occur in metal parts is in contact with hydrogen molecules, such as fuel nozzles or fuel injectors, regardless of leakage.

### SUMMARY

One aspect of this disclosure is directed to a hydrogen fuel nozzle for a gas turbine engine having a plurality of flow circuits, each of which is configured to flow one of a fuel or an oxidizer to a gas turbine engine combustor positioned downstream of the hydrogen fuel nozzle when the gas turbine engine is assembled. At least one of the plurality of flow circuits is a hydrogen flow circuit configured to flow hydrogen to the gas turbine engine combustor. The hydrogen fuel nozzle is formed using an additive manufacturing (AM) technique. A non-hydrogen-exposed zone of the hydrogen fuel nozzle is made with a first material which is a conventional high temperature capable alloy. A hydrogen-exposed zone of the hydrogen fuel nozzle is made with a second material, which is a hydrogen-compatible alloy.

Another aspect of the disclosure is directed to a method of making a hydrogen fuel nozzle for a gas turbine engine. A hydrogen fuel nozzle is integrally formed using an AM technique. A non-hydrogen-exposed zone of the hydrogen fuel nozzle is made with a first material which is a conventional high temperature capable alloy. A hydrogen-exposed zone of the hydrogen fuel nozzle is made with a second material, which is a hydrogen-compatible alloy. The hydrogen fuel nozzle has a plurality of flow circuits, each of which is configured to flow one of a fuel or an oxidizer to a gas turbine engine combustor positioned downstream of the hydrogen fuel nozzle when the gas turbine engine is assembled. At least one of the plurality of flow circuits is a hydrogen flow circuit configured to flow hydrogen to the gas turbine engine combustor. The hydrogen fuel nozzle is post-processed to remove support structures formed in the hydrogen fuel nozzle during the AM process. A surface finishing operation is performed on the hydrogen flow circuit to provide an inside diameter of the hydrogen flow circuit with a surface finish selected to limit hydrogen embrittlement.

Features of embodiments are set forth in the dependent claims.

### BRIEF DESCRIPTION OF THE DRAWINGS

Fig. 1A is a schematic view of a hydrogen fuel nozzle for a gas turbine engine positioned on a powder bed fusion (PBF) additive manufacturing (AM) build plate.
Fig. 1B is another schematic view of a hydrogen fuel nozzle for a gas turbine engine positioned on a powder bed fusion (PBF) additive manufacturing (AM) build plate.
Fig. 2 is a flow chart of a method for building a hydrogen fuel nozzle for a gas turbine engine.
Fig. 3A is a schematic view of a hydrogen flow passage with a rough ("as built") internal diameter surface.
Fig. 3B is a schematic view of a hydrogen flow passage after a surface finishing operation to smooth the internal diameter surface.
Fig. 4 is a schematic view of a bimetallic powder bed fusion (PBF) additive manufacturing (AM) system.
Fig. 5 is a schematic view of another bimetallic PBF AM system.
Fig. 6 is a schematic view of an arc wire bimetallic AM system.

### DETAILED DESCRIPTION

As discussed, because hydrogen is under consideration as a fuel for aircraft engines, certain challenges must be addressed. These challenges include hydrogen embrittlement and hydrogen leakage across connected joints. One approach to addressing hydrogen leakage across connected joints is to use jointless manufacturing techniques, including additive manufacturing (AM) techniques. AM techniques can reduce or eliminate the need for connected joints with good engineering design approaches and effective use of AM techniques. Further, AM techniques can be used to form complicated geometrical features that may be desirable for a hydrogen fuel nozzle, such as various swirling or fuel premixing features.

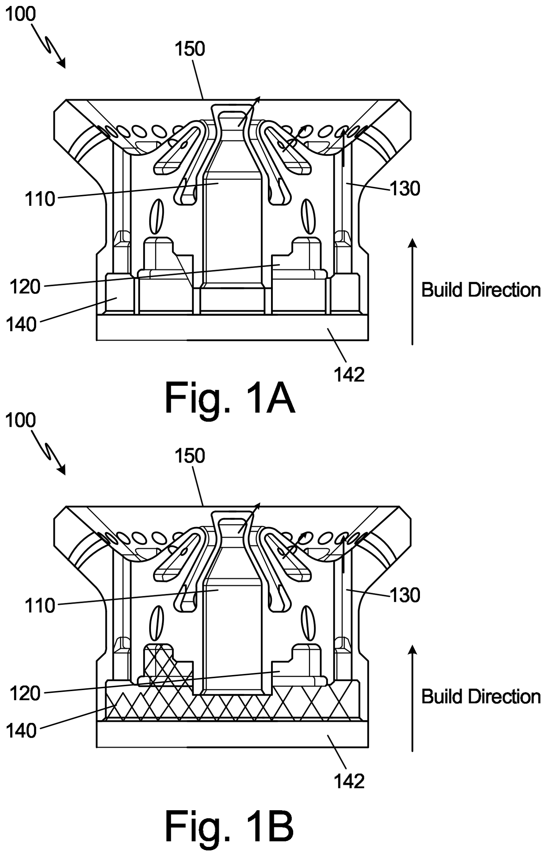

Figs. 1A and 1B are schematics of a hydrogen fuel nozzle **100** that includes a plurality of flow circuits, each of which is configured to flow one of a fuel or an oxidizer (e.g., air) to a gas turbine engine combustor (not shown) positioned downstream of the hydrogen fuel nozzle **100** when the gas turbine engine is assembled. As discussed further below, at least one of the plurality of flow circuits is configured to flow hydrogen to the gas turbine engine combustor. For example, the hydrogen fuel nozzle **100** of Figs. 1A and 1B include a primary flow circuit **110,** a secondary flow circuit **120,** and a tertiary flow circuit **130.** A person of ordinary skill will recognize the hydrogen fuel nozzle **100** may include more then or fewer than three flow circuits **110, 120, 130.** Figs. 1A and 1B also show a plurality of support structures **140** formed adjacent to an AM manufacturing system build plate **142.** Fig. 1A shows the plurality of support structures **140** as formed during the AM build process. Fig. 1B shows with overlaid "X"'s, which of the plurality of support structures **140** are removed in a post AM build processing operation. In some examples, all of the flow circuits can be directed to hydrogen. In other examples, at least one of the flow circuits can be directed to hydrogen with the remaining flow circuits being directed to air. In yet other examples, one of the flow circuits can be directed to a liquid hydrocarbon fuel (e.g., Jet A, a sustainable aviation fuel equivalent to Jet A, or another liquid hydrocarbon fuel), another of the flow circuits can be directed to air, and another of the flow circuits can be directed to hydrogen. In the examples of Figs. 1A and 1B, the primary flow circuit **110** can be directed to a liquid hydrocarbon fuel, the secondary flow circuit **120** can be directed to air, and the tertiary flow circuit **130** can be directed to hydrogen. The assignment of liquid fuel, air, and hydrogen to a particular flow circuit can be selected based on whatever arrangement is deemed appropriate for a particular application. For an application such as the hydrogen fuel nozzle **100,** hydrogen can be provided as a pressurized gas so that it mixes well with liquid fuel and air streams.

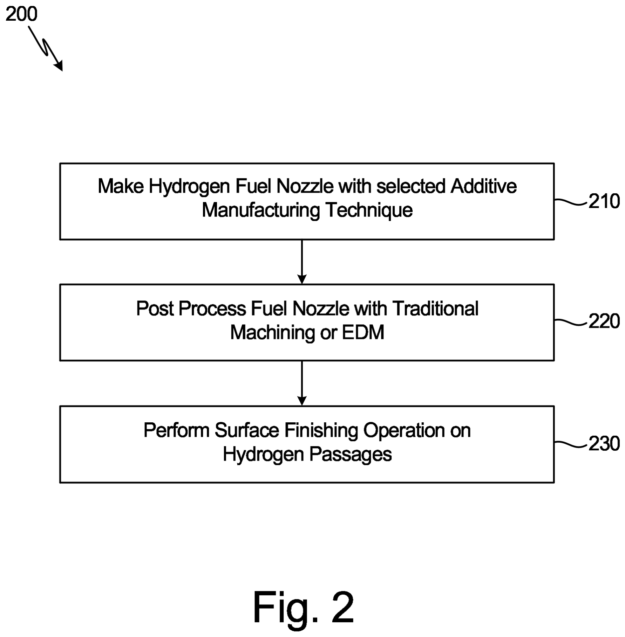

Fig. 2 is a flow chart of an overall process **200** for building a hydrogen fuel nozzle **100** of this disclosure. At step **210,** a selected AM technique is used to make the hydrogen fuel nozzle **100.** The AM technique can be any AM technique deemed suitable for a particular hydrogen fuel nozzle **100.** For example, the selected AM technique can be Powder Bed Fusion (PBF), e.g., Laser PBF (PBF-LB) or Electron Beam PBF (PBF-EB), Directed Energy Deposition (DED), e.g., Laser Powder DED (DED-LB) or Electron Beam Wire DED (DED-EBW), Arc Wire DED (DED-AW), Cold Spray, Binder Jetting, Metal Extrusion (MEX), or any other AM technique deemed for a particular hydrogen fuel nozzle **100.** The considerations that can be used to select a particular AM technique for making the hydrogen fuel nozzle **100** can include, but are not limited to, the materials from which the fuel nozzle **100** will be made, the specific details of the hydrogen fuel nozzle **100** that will be made with AM techniques, and the surface finish produced by the selected AM technique.

Because of the challenges associated with hydrogen embrittlement, portions of the hydrogen fuel nozzle **100** that come into contact with hydrogen, referred to as a "hydrogen-exposed zone," should be made with a hydrogen-compatible alloy designed to limit the impact of hydrogen embrittlement. For example, if tertiary flow circuit **130** is directed to hydrogen as described above, portions of the hydrogen fuel nozzle **100** in the vicinity of tertiary flow circuit **130** would be considered to be part of the "hydrogen-exposed zone" of the hydrogen fuel nozzle **100.** All other portions of the hydrogen fuel nozzle **100** can be considered as a "non-hydrogen-exposed zone" and can be made with conventional high temperature capable alloys. In some examples, the hydrogen-exposed zone can include material within 50mm of surfaces exposed to hydrogen. In other examples, the hydrogen-exposed zone can be larger or smaller then 50mm. The depth of the hydrogen-exposed zone should be determined based on the operating conditions of a particular application and the portion of the hydrogen fuel nozzle **100** considered to be within the hydrogen-exposed zone for manufacturing purposes should be made from a hydrogen-compatible alloy. All other portions of the hydrogen fuel nozzle **100,** i.e., the portions in the non-hydrogen exposed zone, can be made from conventional high temperature capable alloys. As a result, the hydrogen fuel nozzle **100** of this disclosure includes a bimetallic hydrogen fuel nozzle, i.e., a hydrogen fuel nozzle made from two metals.

Examples of hydrogen-compatible alloys include, without limitation, Inconel^{®} 600 nickel-chromium-iron superalloy, Inconel^{®} 625 nickel-chromium superalloy, NASA HR-1 iron-nickel superalloy, and similar alloys. Examples of conventional high temperature capable alloys include without limitation MAR-M200 (59.5Ni-9Cr-10Co-12.5W-1.8Nb-2Ti-5Al-0.05Zr-0.15C-0.015B), Waspaloy (58Ni-19Cr-13Co-4Mo-3Ti-1.4Al), Rene 95 (61Ni-14Cr-8Co-3.5Mo-3.5W-3.5Nb-2.5Ti-3.5Al-0.16C-0.01B-0.05Zr), Inconel^{®} 100 superalloy (60Ni-10Cr-15Co-3Mo-4.7Ti-5.5Al-0.15C-0.015B-0.06Zr-1.0V), and similar nickel-based superalloys and GRCop-84 (Cu-8Cr-4Nb) (at%), GRCop-42 (Cu-4Cr-2Nb) (at%) and similar copper-based alloys.

For use with a selected AM technique, the hydrogen-compatible alloys and conventional high temperature capable alloys should be provided in appropriate form, e.g., powder or wire form, with a powder or wire meeting the specifications associated with the selected AM technique. As described further below, a bimetallic AM technique can be used to build the bimetallic hydrogen fuel nozzle **100** of this disclosure.

At step **220,** the hydrogen fuel nozzle **100** made with the selected AM technique of step **210** can be subjected to one or more selected post-processing steps depending on the selected AM technique. For example, the one or more selected post-processing steps may be used to remove support structures **140** at the bottom of the build plate **142** used to create features that may not be possible with selected AM technique, or used for any other purpose deemed appropriate for a particular hydrogen nozzle **100.** Examples of suitable post-processing steps include mechanical machining (e.g., grinding, cutting, drilling, milling, etc.), chemical processing (e.g., chemical material removal processes, coating processes, etc.), electro-discharge machining (EDM), or other post-processing methods. In one example, an EDM post-processing step can be used to create features that may not be possible with current AM techniques.

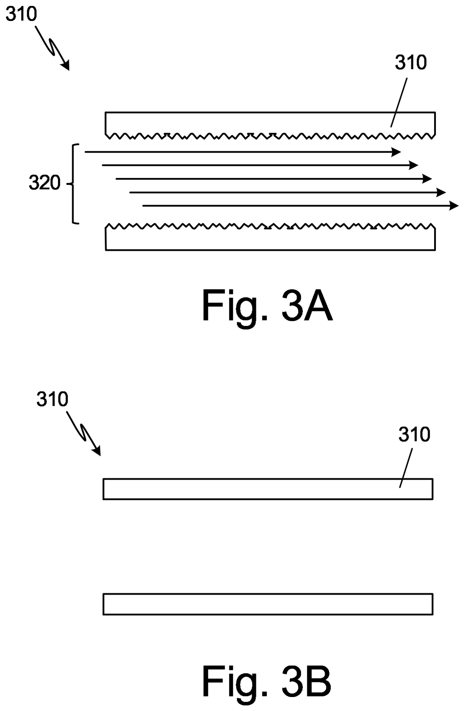

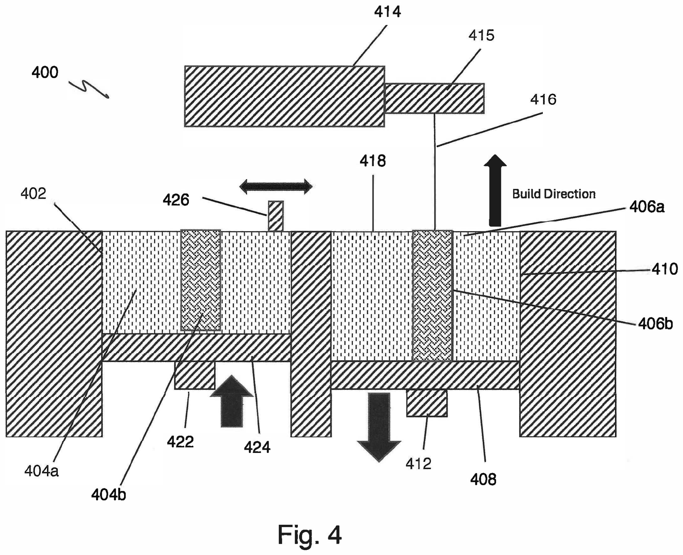

At step **230,** selected passageways in one of the plurality of flow circuits **110, 120, 130** in hydrogen fuel nozzle **100,** particularly passageways that are configured for hydrogen flow, are polished to achieve a desired surface finish. Exemplary polishing processes include chemical milling, chemical/mechanical etching, a selected electrochemical process or any other suitable polishing process may be used to produce a desired surface finish. Figs. 3A and 3B show such a polish process schematically, with Fig. 3A showing a selected hydrogen flow passage **310** having an inside diameter (ID) surface **320** with a rough ("as built") surface finish. Fig. 3A also shows selected chemical finishing reagent **330** flowed through the ID surface **320.** The chemical reagent **330** is selected to perform a chemical milling operation on ID surface **320** to produce a desired smoother surface finish. Fig. 3B shows that the same selected hydrogen flow passage **310** after the chemical milling step has an ID surface **320** with a smooth surface finish selected to limit hydrogen embrittlement. Providing an ID surface **320** a smooth surface finish reduces hydrogen embrittlement by reducing the surface area available for direct hydrogen contact and removing fissures and pores in which hydrogen can accumulate. Achieving the desired smoother surface finish for ID surface **320** may require plugging some flow circuit **110, 120, 130** holes as discussed further below to limit the chemical milling operation to selected passageways (see Figs. 4A-4C).

While the desired specific improvement in ID surface **320** surface finish can vary from application to application, the overall goal of step **230** is to reduce the roughness of the ID surface **320** to form a much smoother surface finish then available by AM techniques only. For example, depending on the specific application, it may be desirable to achieve an average surface roughness of less than 20 µm for a particular ID surface **320.** In other applications, particularly applications that will involve extensive use of hydrogen fuel, it may be desirable to achieve an average surface roughness of less than 5 µm or even less than 3 µm for ID surface 320 used in a hydrogen fuel flow circuit.

Suitable chemical milling reagents can include hydrochloric acid (HCl), nitric acid (HNO₃), other chemical milling reagents, and mixtures of chemical milling reagents including dilutions of chemical milling reagents with an alcohol such as ethanol or another alcohol. Other reagents are also possible depending on the material used to build the hydrogen fuel nozzle **100.** In some examples, polish techniques other than chemical milling can be used to improve the surface finish of ID surface **320.** For example, mechanical milling or other mechanical, electrical, or chemical methods can be used to improve the surface finish of ID surface **320.**

Figs. 4 to 6 are schematic views of bimetallic AM systems that can be used to build the bimetallic hydrogen fuel nozzle **100** of this disclosure.

Fig. 4 shows a PBF AM system **400** that can be used to implement PBF-L and PBF-EB AM techniques to build the bimetallic hydrogen fuel nozzle **100** of this disclosure. The PBF AM system **400** includes a build powder reservoir **402** that includes fresh build powder of a first material **404a,** e.g., a conventional high temperature capable alloy, and fresh build powder of a second material **404b,** e.g., a hydrogen-compatible alloy, that are both available for use during a PBF AM build campaign to build the bimetallic hydrogen fuel nozzle **100** of this disclosure. The build powder beds **406a** of the first material and **406b** of the second material that are in active use during a PBF AM build campaign are positioned on a build plate **408** that is configured to operate in a build chamber **410** based on movement of a build piston **412.** After an initial charge of build powder bed **406a, 406b** from the build powder reservoir **402** is placed onto the build plate **408** in the build chamber **410,** an energy source **414** with scanning system **415** scans an energy source **416** over a top layer **418** of the build powder beds **406a, 406b**. As discussed above, the energy source **416** can be a laser (for a PBF-LB process) or an electron beam (for a PBF-EB process). The energy source **416** fuses, sinters, or consolidates selected portions of the top layer **418** as it scans across the top layer **418.** As known in the art, the energy source scanning system **415** can be programmed to deliver a predetermined energy/power input with a predetermined scan pattern, scan rate, and energy source **416** power level to build a single layer of the bimetallic hydrogen fuel nozzle **100.**

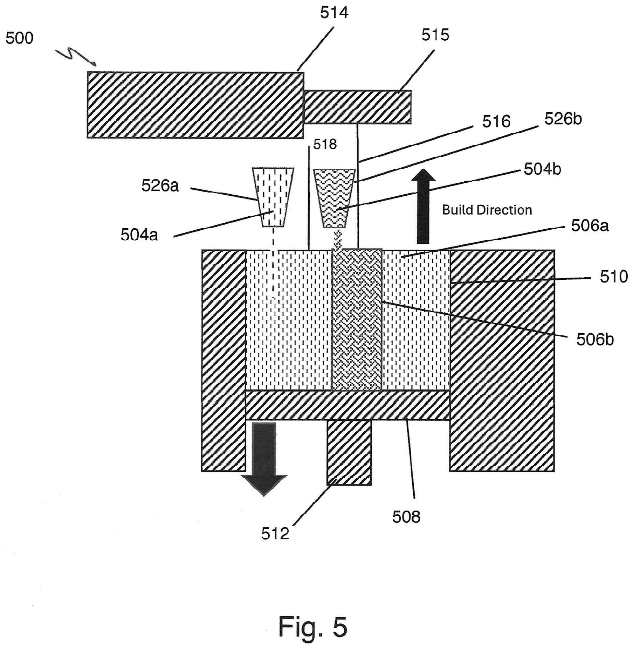

After the single layer of the bimetallic hydrogen fuel nozzle **100** is built, the build plate **408** is lowered, and a fresh powder distributor **426** is used to spread another layer of fresh powder feedstock **404a, 404b** from build powder reservoir **402** on top of the build powder bed **406a, 406b.** The fresh build powder distributor can be any device configured to distribute a layer of fresh build powder **404a, 404b** on top of the build powder bed **406a, 406b** such that the layer of fresh build powder **404a, 404b** is level and smooth. Examples of suitable fresh build powder distributors include the recoater **426** of Figs. 4 and the fresh build powder distributors **526a, 526b** of Fig. 5. A person of ordinary skill will recognize that other devices suitable for distributing a layer of fresh build powder **404a, 404b** on top of the build powder beds **406a, 406b** are available.

In the example of Fig. 4, the build piston **412** lowers the build plate **408** in the build chamber **410** to create space to spread a layer of fresh build powder **404a, 404b** on top of the build powder bed **406a, 406b.** In the example depicted in Fig. 4, a build powder piston **422** in the build powder reservoir raises a build powder plate **424** to raise a quantity of fresh build powder **404a, 404b** that a recoater **426** spreads on top of the build powder beds **406a, 406b.** The recoater **426** typically travels across (traverses) the entire surface of the build chamber **410** to provide an even layer of fresh build powder **404a, 404b** on top of the build powder bed **106.** Following distribution of fresh build powder **104** on top of the build powder beds **406a, 406b,** the energy source scanning system **415** scans the top layer of the build powder beds **406a, 406b** to form the next layer of bimetallic hydrogen fuel nozzle **100.** This process is repeated until the entire bimetallic hydrogen fuel nozzle **100** is built.

Fig. 5 shows another example of a PBF AM system **500** that can be used to implement PBF-L and PBF-EB AM techniques to build the bimetallic hydrogen fuel nozzle **100** of this disclosure. Fresh build powder distributors **526a** (for fresh build powder of a first material **504a,** e.g., a conventional high temperature capable alloy) and **526b** (for fresh build powder of a second material **504b,** e.g., a hydrogen-compatible alloy) so that both are available for use during a PBF AM build campaign to build the bimetallic hydrogen fuel nozzle **100** of this disclosure. After an initial charge of build powder bed **506a**, **506b** is placed onto the build plate **508** in the build chamber **510,** an energy source **514** with scanning system **515** scans an energy source **516** over a top layer **518** of the build powder beds **506a, 506b**. As discussed above, the energy source **516** can be a laser (for a PBF-LB process) or an electron beam (for a PBF-EB process). The energy source **516** fuses, sinters, or consolidates selected portions of the top layer **518** as it scans across the top layer **518.** As known in the art, the energy source scanning system **515** can be programmed to deliver a predetermined energy/power input with a predetermined scan pattern, scan rate, and energy source **516** power level to build a single layer of the bimetallic hydrogen fuel nozzle **100.**

After the single layer of the bimetallic hydrogen fuel nozzle **100** is built, the build plate **508** is lowered, and fresh powder distributors **526a, 526b** is used to spread another layer of fresh powder feedstock **504a, 504b** on top of the build powder beds **506a, 506b**.

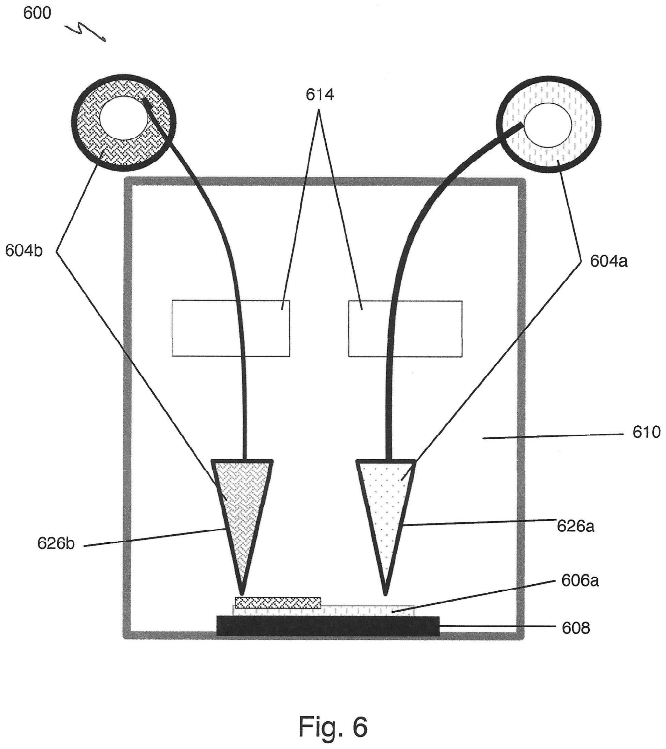

Fig. 6 shows an example of a DED-AW system **600** that can be used to implement DED-AW AM techniques to build the bimetallic hydrogen fuel nozzle **100** of this disclosure. Fresh build material of a first material **604a**, e.g., a conventional high temperature capable alloy, and a second material **604b**, e.g., a hydrogen-compatible alloy, is directed to build material nozzles **626a** and **626b** through energy sources **614** so that both the first material **604a** and second material **604b** are available for use during a DED-AW AM build campaign to build the bimetallic hydrogen fuel nozzle **100** of this disclosure. The build material nozzles **626a** and **626b** direct the first material **604a** and second material **604b** onto a printing bed **608** to build the bimetallic hydrogen fuel nozzle **100** of this disclosure.

In some examples, AM techniques can be combined to build the bimetallic hydrogen fuel nozzle **100** of this disclosure. For example, portions of the bimetallic hydrogen fuel nozzle **100** that are deemed to be in a "non-hydrogen-exposed zone" can be made with a conventional high temperature capable alloy using a first AM technique and portions of the bimetallic hydrogen fuel nozzle **100** that are deemed to be in a "hydrogen-exposed zone" can be made with a hydrogen-compatible alloy using a second AM technique. In some examples, the first AM technique can be PBF-LB or another AM technique and the second AM technique can be PBF-EB, DED-LP, DED-EBW, DED-AW, Cold Spray or another AM technique. Other combinations of first AM technique and second AM technique can be used as deemed appropriate for a particular application.

The disclosed bimetallic hydrogen fuel nozzles address many of the challenges associated with using hydrogen as a fuel for aircraft engines. These include use of AM techniques to reduce or eliminate the need for connected joints and the use of hydrogen-compatible alloys that are less susceptible to hydrogen embrittlement.

### DISCUSSION OF POSSIBLE EMBODIMENTS

The following are non-exclusive descriptions of possible embodiments of the present invention.

A hydrogen fuel nozzle for a gas turbine engine has a plurality of flow circuits, each of which is configured to flow one of a fuel or an oxidizer to a gas turbine engine combustor positioned downstream of the hydrogen fuel nozzle when the gas turbine engine is assembled. At least one of the plurality of flow circuits is a hydrogen flow circuit configured to flow hydrogen to the gas turbine engine combustor. The hydrogen fuel nozzle is formed using an additive manufacturing (AM) technique. A non-hydrogen-exposed zone of the hydrogen fuel nozzle is made with a first material which is a conventional high temperature capable alloy. A hydrogen-exposed zone of the hydrogen fuel nozzle is made with a second material, which is a hydrogen-compatible alloy.

The component protection casing of the preceding paragraph can optionally include, additionally and/or alternatively, any one or more of the following features, configurations and/or additional elements:
The AM technique is at least one of laser powder bed fusion, electron beam powder bed fusion, laser powder directed energy deposition, electron beam wire directed energy deposition, arc wire directed energy deposition, cold spray, binder jetting, and metal extrusion.

The AM technique is laser powder bed fusion.

The AM technique is arc wire directed energy deposition.

The AM technique is a combination of a first AM technique and a second AM technique.

The first AM technique is laser powder bed fusion and the second AM technique is one of electron beam powder bed fusion, laser powder directed energy deposition, electron beam wire directed energy deposition, arc wire directed energy deposition, cold spray, binder jetting, and metal extrusion.

The conventional high temperature capable alloy is one MAR-M200, Waspaloy, Rene 95, Inconel^{®} 100 superalloy, GRCop-84, and GRCop-42.

The hydrogen-compatible alloy is one of Inconel^{®} 600 nickel-chromium-iron superalloy, Inconel^{®} 625 nickel-chromium superalloy, and NASA HR-1 iron-nickel superalloy.

The hydrogen fuel nozzle has three flow circuits.

A primary flow circuit is configured to flow a liquid hydrocarbon fuel to the gas turbine engine combustor, a secondary flow circuit is configured to flow an oxidizer to the gas turbine engine combustor, and a tertiary flow circuit is configured to flow hydrogen to the gas turbine engine combustor.

A method of making a hydrogen fuel nozzle for a gas turbine engine includes forming a hydrogen fuel nozzle using an AM technique. A non-hydrogen-exposed zone of the hydrogen fuel nozzle is made with a first material which is a conventional high temperature capable alloy. A hydrogen-exposed zone of the hydrogen fuel nozzle is made with a second material, which is a hydrogen-compatible alloy. The hydrogen fuel nozzle has a plurality of flow circuits, each of which is configured to flow one of a fuel or an oxidizer to a gas turbine engine combustor positioned downstream of the hydrogen fuel nozzle when the gas turbine engine is assembled. At least one of the plurality of flow circuits is a hydrogen flow circuit configured to flow hydrogen to the gas turbine engine combustor. The hydrogen fuel nozzle is post-processed to remove support structures formed in the hydrogen fuel nozzle during the AM process. A surface finishing operation is performed on the hydrogen flow circuit to provide an inside diameter of the hydrogen flow circuit with a surface finish selected to limit hydrogen embrittlement.

The method of the preceding paragraph can optionally include, additionally and/or alternatively, any one or more of the following features, configurations and/or additional elements:
The AM technique is at least one of laser powder bed fusion, electron beam powder bed fusion, laser powder directed energy deposition, electron beam wire directed energy deposition, arc wire directed energy deposition, cold spray, binder jetting, and metal extrusion.

The AM technique is laser powder bed fusion.

The AM technique is arc wire directed energy deposition.

The AM technique is a combination of a first AM technique and a second AM technique.

The first AM technique is laser powder bed fusion and the second AM technique is one of electron beam powder bed fusion, laser powder directed energy deposition, electron beam wire directed energy deposition, arc wire directed energy deposition, cold spray, binder jetting, and metal extrusion.

The conventional high temperature capable alloy is one MAR-M200, Waspaloy, Rene 95, Inconel^{®} 100 superalloy, GRCop-84, and GRCop-42.

The hydrogen-compatible alloy is one of Inconel^{®} 600 nickel-chromium-iron superalloy, Inconel^{®} 625 nickel-chromium superalloy, and NASA HR-1 iron-nickel superalloy.

The hydrogen fuel nozzle is formed with three flow circuits.

A primary flow circuit is configured to flow a liquid hydrocarbon fuel to the gas turbine engine combustor, a secondary flow circuit is configured to flow an oxidizer to the gas turbine engine combustor, and a tertiary flow circuit is configured to flow hydrogen to the gas turbine engine combustor.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A hydrogen fuel nozzle (100) for a gas turbine engine comprising:
a plurality of flow circuits (110, 120, 130), each of which is configured to flow one of a fuel or an oxidizer to a gas turbine engine combustor positioned downstream of the hydrogen fuel nozzle (100) when the gas turbine engine is assembled, wherein at least one of the plurality of flow circuits (110, 120, 130) is a hydrogen flow circuit (110; 310) configured to flow hydrogen to the gas turbine engine combustor;
wherein:
the hydrogen fuel nozzle (100) is formed using an additive manufacturing (AM) technique;
a non-hydrogen-exposed zone of the hydrogen fuel nozzle (100) is made with a first material (404a), wherein the first material (404a) is a conventional high temperature capable alloy (404a); and
a hydrogen-exposed zone of the hydrogen fuel nozzle (100) is made with a second material (404b), wherein the second material is a hydrogen-compatible alloy (404b).

2. A method of making a hydrogen fuel nozzle (100) for a gas turbine engine comprising:
integrally forming, using a continuous additive manufacturing (AM) technique, a hydrogen fuel nozzle (100) from a first material (404a) and a second material (404b), wherein the hydrogen fuel nozzle (100) has a plurality of flow circuits (110, 120, 130), wherein each of the plurality of flow circuits (110, 120, 130) is configured to flow one of a fuel or an oxidizer to a gas turbine engine combustor positioned downstream of the hydrogen fuel nozzle (100) when the gas turbine engine is assembled, and wherein at least one of the plurality of flow circuits (110, 120, 130) is a hydrogen flow circuit (110; 310) configured to flow hydrogen to the gas turbine engine combustor, wherein:
a non-hydrogen-exposed zone of the hydrogen fuel nozzle (100) is made with the first material (404a), wherein the first material (404a) is a conventional high temperature capable alloy (404a); and
a hydrogen-exposed zone of the hydrogen fuel nozzle (100) is made with the second material (404b), wherein the second material (404b) is a hydrogen-compatible alloy (404b);
post-processing the hydrogen fuel nozzle (100) to remove support structures (140) formed in the hydrogen fuel nozzle (100) during the AM process; and
performing a surface finishing operation on the hydrogen flow circuit (110; 310) to provide an inside diameter (320) of the hydrogen flow circuit (110; 310) with a surface finish selected to limit hydrogen embrittlement.

3. The hydrogen fuel nozzle of claim 1 or method of claim 2, wherein the AM technique is at least one of laser powder bed fusion, electron beam powder bed fusion, laser powder directed energy deposition, electron beam wire directed energy deposition, arc wire directed energy deposition, cold spray, binder jetting, and metal extrusion.

4. The hydrogen fuel nozzle or method of claim 3, wherein the AM technique is laser powder bed fusion.

5. The hydrogen fuel nozzle method of claim 3, wherein the AM technique is arc wire directed energy deposition.

6. The hydrogen fuel nozzle or method of claim 3, wherein the AM technique is a combination of a first AM technique and a second AM technique.

7. The hydrogen fuel nozzle method of claim 6, wherein the first AM technique is laser powder bed fusion and the second AM technique is one of electron beam powder bed fusion, laser powder directed energy deposition, electron beam wire directed energy deposition, arc wire directed energy deposition, cold spray, binder jetting, and metal extrusion.

8. The hydrogen fuel nozzle or method of any preceding claim, wherein the conventional high temperature capable alloy (400a) is one MAR-M200, Waspaloy, Rene 95, Inconel^{®} 100 superalloy, GRCop-84, and GRCop-42.

9. The hydrogen fuel nozzle or method of any preceding claim, wherein the hydrogen-compatible alloy (400b) is one of Inconel^{®} 600 nickel-chromium-iron superalloy, Inconel^{®} 625 nickel-chromium superalloy, and NASA HR-1 iron-nickel superalloy.

10. The hydrogen fuel nozzle or method of any preceding claim, wherein the hydrogen fuel nozzle (100) is formed with three flow circuits (110, 120, 130).

11. The hydrogen fuel nozzle or method of claim 10, wherein a primary flow circuit (110) is configured to flow a liquid hydrocarbon fuel to the gas turbine engine combustor, a secondary flow circuit (120) is configured to flow an oxidizer to the gas turbine engine combustor, and a tertiary flow circuit (130) is configured to flow hydrogen to the gas turbine engine combustor.
